(19) Europäisches Patentamt / European Patent Office / Office européen des brevets

(11) **EP 4 242 048 A1**

(12) **EUROPÄISCHE PATENTANMELDUNG**

(43) Veröffentlichungstag:
13.09.2023 Patentblatt 2023/37

(51) Internationale Patentklassifikation (IPC):
*B60L 53/51* (2019.01) *B60L 53/63* (2019.01)

(21) Anmeldenummer: 23160279.8

(52) Gemeinsame Patentklassifikation (CPC):
**B60L 53/63; B60L 53/51**

(22) Anmeldetag: 06.03.2023

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **10.03.2022 DE 102022202440**

(71) Anmelder: **Libreo GmbH**
**97318 Kitzingen (DE)**

(72) Erfinder: **BECK, Bernhard**
**97332 Volkach (DE)**

(74) Vertreter: **FDST Patentanwälte**
**Nordostpark 16**
**90411 Nürnberg (DE)**

(54) **NETZSCHONENDES LADEMANAGEMENT FÜR EINE LADESTATION**

(57) Es werden eine Einrichtung (2) zum Laden eines Elektrofahrzeugs (4) sowie ein Verfahren zum Betrieb derselben angegeben. Die Einrichtung (2) umfasst eine Ladestation (6), die unmittelbar oder mittelbar über eine lokale Stromverteilung (8) an ein öffentliches Stromnetz (12) anschließbar ist, um einen Ladestrom ($I_L$) mit einem bestimmten Vorgabewert (V) der Ladestromstärke für das Elektrofahrzeug (4) zur Verfügung zu stellen. Der Vorgabewert (V) wird dabei zeitlich variierend vorgegeben, so dass der Vorgabewert (V) gegenläufig zu einer Netzauslastung des Stromnetzes (12) variiert.

Fig. 1

EP 4 242 048 A1

**Beschreibung**

Die Erfindung bezieht sich auf ein Verfahren zum Betrieb einer Ladestation zum Laden eines Elektrofahrzeugs (kurz E-Fahrzeug) sowie auf eine Einrichtung zum Laden eines E-Fahrzeugs, die eine solche Ladestation umfasst.

Eine Ladestation der oben genannten Art ist entweder unmittelbar oder mittelbar über eine lokale Stromverteilung an ein öffentliches Stromnetz anschließbar, um einen Ladestrom für das E-Fahrzeug zur Verfügung zu stellen. Die Ladestation gibt hierbei durch Kommunikation mit einer Ladesteuerung des E-Fahrzeugs den Ladevorgang (also die Ausgabe des elektrischen Ladestroms) frei und gibt dabei einen Vorgabewert für die Stromstärke des Ladestroms vor. Der Vorgabewert definiert die maximale Stromstärke des Ladestroms, die das E-Fahrzeug abrufen kann. Im Rahmen dieses Vorgabewerts steuert dann die Ladesteuerung des E-Fahrzeugs während des Ladevorgangs den tatsächlich gezogenen Ladestrom. Als "lokale Stromverteilung" wird hier und im Folgenden die durch einen Netzverknüpfungspunkt von dem öffentlichen Stromnetz abgegrenzte elektrische Installation, z.B. eines Hauses (Hausstrominstallation) oder Gewerbebetriebs, bezeichnet. Die lokale Stromverteilung umfasst also diejenigen elektrischen Leitungen und Verbraucher sowie gegebenenfalls vorhandene Speicher und/der Stromerzeugungseinheiten, die sich aus Sicht der Ladestation diesseits des Netzverknüpfungspunktes befinden und somit nicht zu dem öffentlichen Stromnetz gehören.

Die Erfindung bezieht sich vorrangig auf eine Ladestation, die den Ladestrom als ein- bis dreiphasigen Wechselstrom ausgibt. Solche Ladestationen werden überwiegend im privaten Bereich oder auf Parkplätzen oder Parkhäusern von Unternehmen oder Geschäften eingesetzt und sind beispielsweise als wandmontierte "Wallbox" oder als auf dem Boden stehende Ladesäule ausgebildet. Alternativ umfasst diese Anmeldung auch Gleichstrom-Ladestationen, welche dem Fahrzeug den Ladestrom in Form eines Gleichstroms bereitstellen.

Bisherige Ladestationen geben den Ladevorgang meistens frei, sobald das zu ladende E-Fahrzeug an die Ladestation angeschlossen wird. Häufig kann dabei an der Ladestation oder im E-Fahrzeug oder mittels einer auf die Ladestation oder das E-Fahrzeug wirkenden Software-Applikation (App) der Vorgabewert des Ladestroms festgelegt werden.

Die wachsende Verbreitung von E-Fahrzeugen und zugeordneten Ladestationen wird zu einer zunehmenden Belastungsprobe für die öffentlichen Stromnetze. Es ist insbesondere absehbar, dass mit der bestehenden Netzinfrastruktur der künftig zu erwartende Bedarf an Ladestrom nicht ohne unterstützende Maßnahmen zur Verfügung zu stellen sein wird.

Der Erfindung liegt die Aufgabe zugrunde, ein netzschonendes Lademanagement für das Laden eines E-Fahrzeugs bereitzustellen. Das Verfahren soll dabei insbesondere unaufwändig realisierbar sein.

Bezüglich eines Verfahrens zum Betrieb einer zum Laden eines E-Fahrzeugs vorgesehenen Ladestation wird diese Aufgabe erfindungsgemäß gelöst durch die Merkmale des Anspruchs 1. Bezüglich einer Einrichtung zum Laden eines Elektrofahrzeugs wird die obige Aufgabe erfindungsgemäß gelöst durch die Merkmale des Anspruchs 10. Vorteilhafte und teils für sich gesehen erfinderische Ausführungen der Erfindung sind in den Unteransprüchen und der nachfolgenden Beschreibung dargelegt.

Erfindungsgemäß ist vorgesehen, dass der Vorgabewert zeitlich variierend vorgegeben wird, so dass der Vorgabewert gegenläufig zu einer Netzauslastung des Stromnetzes variiert. Der Vorgabewert wird dabei insbesondere kontinuierlich oder in mehreren Stufen variiert. Vorzugsweise wird der Vorgabewert der Ladestromstärke hierbei anhand einer hinterlegten Ladekurve bestimmt, die insbesondere in Form einer zeitabhängigen mathematischen Funktion (also einer mathematischen Formel) in Abhängigkeit von der Zeit t, in Form einer Stützpunkttabelle oder in einer Mischform aus Stützpunkten und Formel, hinterlegt ist. Die Ladekurve L kann dabei im Rahmen der Erfindung den einzustellenden Vorgabewert V der Ladestromstärke unmittelbar wiedergeben:

$$V = L(t),$$

wobei V den Vorgabewert, L die Ladekurve und t die Zeit repräsentiert. Alternativ kann die Ladekurve im Rahmen der Erfindung aber auch so definiert sein, dass sie nur den Verlauf des Vorgabewerts abbildet und mit letzterem in einer - z.B. linearen - Beziehung steht:

$$V = k \cdot L(t),$$

wobei k für einen (von null verschiedenen) konstanten oder ebenfalls veränderlichen Parameter steht.

Die Ladekurve kann im Rahmen der Erfindung herstellerseitig in die Steuerelektronik der Ladestation oder eines externen Steuergeräts einprogrammiert werden oder auf einem Speichermedium (z.B. einer SD-Karte) zur Verfügung gestellt werden. Alternativ kann die Ladekurve per Download (z.B. über ein Mobilfunknetz, LAN, W-Lan oder per Bluetooth unter Nutzung eines Mobilgeräts) in die Ladestation oder das externe Steuergerät übertragen werden.

Die Ladekurve kann weiterhin entweder einmalig fest zur Verfügung gestellt oder regelmäßig oder unregelmäßig aktualisiert werden.

Die Ladekurve kann im Rahmen der Erfindung (ausschließlich) in Abhängigkeit der Tageszeit (eines einzigen Tages) definiert sein, so dass die Ladekurve an jedem Tag die gleiche Form hat. Wenn die Ladekurve als Stützpunkttabelle vorliegt, umfasst sie in dieser Ausführung z.B. 24 Punkte (also einen Punkt pro Stunde), 96 Punkte (d.h. einen Punkt pro Viertelstunde) oder 1440 Punkte (d.h. einen Punkt pro Minute). Die Ladekurve kann alternativ auch einen Zeitraum von weniger als 24 Stunden abdecken. In diesem Fall wird die Ladekurve vorzugsweise jeweils nur innerhalb eines Abschnitts eines jeden Tages (z.B. nur zwischen 7 Uhr und 22 Uhr) abgearbeitet. Vorzugsweise ist die Ladekurve aber auch auf einer 24 Stunden überschreitenden Zeitskala, insbesondere für eine Woche, einen oder mehrere Monate oder - bevorzugt - ein ganzes Jahr, veränderlich vorgegeben. Anstelle einer einzigen zusammenhängen Ladekurve kann die Ladekurve auch aus mehreren Kurvenstücken (oder Dateien) zusammengesetzt sein, die alternativ zueinander herangezogen werden. Beispielsweise ist für jeden Monat des Jahres eine separate Ladekurve hinterlegt.

Vorzugsweise ist die Ladekurve in der Ladestation selbst hinterlegt. Alternativ hierzu kann die Ladekurve aber auch in einem externen (d.h. nicht zur Ladestation gehörenden) Datenspeicher, z.B. einer Speicherkarte oder dem Speicher eines externen Kontrollgeräts (z.B. einem Zentralrechner oder Cloud-Server) hinterlegt sein und von dort aus der Ladestation im Betrieb zur Verfügung gestellt werden.

Die Steuerung des Vorgabewerts für die Ladestromstärke anhand der hinterlegten Ladekurve hat den Vorteil, dass ein netzschonendes Lademanagement ohne aufwändige Installation, insbesondere ohne Einsatz von externen Stromzählern oder Stromsensoren und deren datenübertragungstechnische Verbindung mit der Ladestation möglich ist. Eine Zusammenwirkung der Ladestation mit einem externen Stromzähler oder Stromsensor ist daher bei bevorzugten Ausführungsformen der erfindungsgemäßen Ladestation auch nicht vorgesehen. Weiterhin kann die Ladestation in einigen Ausführungen der Erfindung offline, also ohne permanenten Anschluss der Ladestation an ein regionales oder überregionales Datenübertragungsnetzwerk wie z.B. das Internet und/oder ein Mobilfunknetz betrieben werden. In besonders einfachen Ausführungen umfasst die Ladestation daher auch keine Schnittstellen zum Anschluss an solche Datenübertragungsnetze.

In bestimmten Ausführungsformen des erfindungsgemäßen Verfahrens und der erfindungsgemäßen Einrichtung können Daten eines Stromsensors am Netzverknüpfungspunkt der lokalen Stromverteilung oder einem vorgelagerten Leitungsstrang oder Transformator des Stromnetzes aber als zusätzlicher Parameter bei der Bestimmung des Vorgabewerts berücksichtigt werden. Beispielsweise wird der sich aus der Ladekurve ergebende Vorgabewert in Abhängigkeit von der gemessenen Stromstärke am Netzverknüpfungspunkt der lokalen Stromverteilung bzw. dem vorgelagerten Leitungsstrang oder Transformator des Stromnetzes skaliert oder verschoben.

Die zur Netzauslastung des Stromnetzes gegenläufige Variation des Vorgabewerts bedeutet, dass der Vorgabewert der Ladestromstärke immer dann erniedrigt oder sogar auf null abgesenkt wird, wenn die Netzauslastung des Stromnetzes besonders hoch ist, wohingegen der Vorgabewert in Zeiten geringer Netzauslastung erhöht wird. Hierdurch wird erreicht, dass die Ladestation nicht zur Verstärkung der unabhängig von der E-Mobilität bestehenden Schwankungen der Netzauslastung beiträgt, sondern vielmehr den Netzbetreibern hilft, die Netzauslastung zeitlich besser zu verteilen und somit bei vergleichsweise geringer Spitzen-Netzauslastung insgesamt besonders viel Ladestrom zur Verfügung zu stellen.

In einer bevorzugten Ausführung der Erfindung ist als Ladekurve eine Netzauslastungskurve A(t) vorgegeben, die die Netzauslastung des Stromnetzes zeitaufgelöst wiedergibt. Der Vorgabewert wird hierbei anhand des Abstands (d.h. der Differenz) eines aktuellen Werts der Netzauslastungskurve zu einem vorgegebenen Schwellwert $A_{max}$ bestimmt, z.B. gemäß

$$V = k \cdot ( A_{max} - A(t) ) + V_{min} \qquad ,$$

Der Vorgabewert V wird hierbei beim Laden zweckmäßigerweise innerhalb vorgegebener Grenzwerte [$V_{min}$; $V_{max}$] gehalten. Der Parameter $V_{min}$ steht hier für den von der Ladeautomatik des zu ladenden Elektrofahrzeugs geforderten Mindestladestrom, bei dessen Unterschreitung der Vorgabewert auf null gesetzt wird.

In einer vorteilhaften Ausführungsform ist die Ladekurve (insbesondere in Form der auch als "Lastprofil" bezeichneten Netzauslastungskurve) spezifisch für den geographischen Standort der Ladestation definiert. Der geographische Standort der Ladestation kann dabei im Rahmen der Erfindung unterschiedlich genau eingegrenzt werden. Beispielsweise kann die Ladekurve in unterschiedlichen Ausführungen derart angegeben werden, dass sie für

- das Land oder den Landesteil (z.B. Bundesstaat oder Verwaltungsbezirk), oder
- die Stadt oder den Postleitzahlenbereich,

in dem bzw. der sich die Ladestation befindet, spezifisch ist. Alternativ hierzu wird die Ladekurve in einer bevorzugten Ausführung der Erfindung spezifisch für die konkreten geographischen Koordinaten des Standorts der Ladestation bestimmt.

Alternativ kann die Ladekurve im Rahmen der Erfindung auch spezifisch für einen abgegrenzten Netzbereich des Stromnetzes, an den die Ladestation angeschlossen ist, berechnet und vorgegeben sein, z.B. für einen Leitungsstrang, einen Verteilnetzbereich, einen Bilanzkreis oder einen lokalen oder regionalen Netzbetreiber. Der abgegrenzte Netzbereich kann dabei eine oder mehrere Netzebenen umfassen.

In einer einfach realisierbaren, aber dennoch effektiven Ausführung der Erfindung wird die Ladekurve derart vorgegeben, dass sie an die sich im Wochen- und/oder Jahresverlauf durchschnittlich ergebenden Unterschiede der Netzauslastung angepasst ist. Der sich im Jahresverlauf durchschnittlich ergebende Unterschied der Netzauslastung kann hierbei im Rahmen der Erfindung in unterschiedlicher zeitlicher Genauigkeit in der Ladekurve abgebildet sein. Beispielsweise kann die Ladekurve im Rahmen der Erfindung derart vorgegeben, dass sie

- für unterschiedliche Wochentage,
- für unterschiedliche Halbjahre, Trimester, Quartale oder Monate,
- für die Jahreszeiten Frühjahr, Sommer, Herbst, Winter oder
- für jeden Tag im Jahr

jeweils einen individuellen Tagesverlauf aufweist. Dem liegt die Erkenntnis zugrunde, dass die durchschnittliche Netzauslastung typischerweise einen Tagesverlauf mit drei Maxima (Peaks), nämlich einem Morgen-Peak, einem Mittags-Peak und einem Abend-Peak, aufweist. In den Wintermonaten sind hierbei typischerweise der Morgen-Peak und der Abend-Peak besonders ausgeprägt, da zu diesen Zeiten vermehrt elektrische Energie für Beleuchtung und zur Wärmeerzeugung verwendet wird. In den Sommer-Monaten ist dagegen der Mittags-Peak besonders ausgeprägt, da hier in der Tagesmitte vermehrt elektrische Energie zum Kühlen verbraucht wird. Zudem weist die durchschnittliche Netzauslastung auch starke Unterschiede zwischen Werktagen und arbeitsfreien Tagen auf. So tritt an arbeitsfreien Tagen (insbesondere im Westeuropäischen Raum an Sonntagen) der Morgen-Peak deutlich später auf als an Werktagen und verschmilzt dabei unter Umständen (insbesondere in den Wintermonaten) mehr oder weniger mit dem Mittags-Peak. Diese Unterschiede der durchschnittlichen Netzauslastungskurve werden vorzugsweise in der Ladekurve berücksichtigt. Hierdurch wird der Vorgabewert während des Morgen-Peaks, des Mittags-Peaks und/oder des Abend-Peaks vorübergehend, gegebenenfalls bis auf null, reduziert.

In einer weiteren vorteilhaften Ausführung der Erfindung wird der Vorgabewert der Ladestromstärke in Abhängigkeit von einer Information über die (aktuelle oder prognostizierte) tatsächliche Netzauslastung an dem geographischen Standort der Ladestation oder in dem abgegrenzten Netzbereich variiert. Als Information über die tatsächliche Netzauslastung werden dabei insbesondere

- die gemessene Netzspannung (insbesondere anhand von Messdaten eines in die Ladestation integrierten Netzspannungssensors), und/oder
- die gemessene Netzfrequenz, und/oder
- Prognosedaten bezüglich einer zu erwartenden Netzauslastung

herangezogen.

Die optionale Heranziehung der Netzspannung und/oder der Netzfrequenz als Steuergröße für die Einstellung des Vorgabewertes der Ladestromstärke beruht auf der Erkenntnis, dass die Netzspannung geringfügig mit der lokalen und regionalen Netzauslastung schwankt. Insbesondere wird der Vorgabewert der Ladestromstärke bei vergleichsweise hoher Netzspannung erhöht und bei vergleichsweise niedriger Netzspannung erniedrigt. Gegenüber bekannten Verfahren, bei denen der Ladestrom in Abhängigkeit der Daten von Stromzählern oder Stromsensoren gesteuert wird, hat die vorstehend beschriebene Erfindungsvariante den Vorteil, dass die Messung der Netzspannung in der Ladestation selbst oder in unmittelbarer Nähe derselben erfolgen kann (und vorzugsweise auch erfolgt), so dass eine aufwändige Installation nicht erforderlich (und insbesondere auch nicht vorhanden) ist.

In einer vorteilhaften Ausführungsform der Erfindung wird der Verlauf der Netzspannung durch die Ladestation oder ein externes Steuergerät laufend oder zumindest über einen längeren Zeitraum aufgezeichnet. Sofern diese Aufzeichnung durch das ggf. vorhandene externe Steuergerät erfolgt, wird dieses hierzu vorzugsweise in der lokalen Stromverteilung, insbesondere schaltungstechnisch in der Nähe der Ladestation, angeordnet. Durch tageszeitaufgelöste Mittelung und ggf. zusätzliche zeitliche Glättung der gemessenen Netzspannung wird hierbei - durch die Ladestation bzw. das externe Steuergerät - für den Standort der Ladestation ein durchschnittlicher Tagesverlauf der Netzspannung ermittelt. Im Betrieb der Ladestation wird dabei der Vorgabewert der Ladestromstärke in Abhängigkeit von der Abweichung eines aktuell gemessenen Werts der Netzspannung von dem anhand des durchschnittlichen Tagesverlaufs zu erwartenden Wert variiert. Der Vorgabewert wird dabei insbesondere dann erhöht, wenn die aktuell gemessene Netzspannung über dem für die jeweilige Tageszeit zu erwartenden Wert liegt. Der Vorgabewert wird entsprechend erniedrigt, wenn die aktuell gemessene Netzspannung unter dem für die jeweilige Tageszeit zu erwartenden Wert liegt.

Prognosedaten über die Netzauslastung werden insbesondere automatisch von der Ladestation oder einem externen Steuergerät aus dem Internet abgerufen.

In einer besonders vorteilhaften Ausführungsform der Erfindung werden die Prognosedaten mittels einer auf einem mobilen Endgerät (z.B. Smartphone oder Tablet) installierten Software-Applikation (App) heruntergeladen oder ermittelt, wobei diese App unter Nutzung einer Sende- und Empfangseinheit des Endgeräts datenübertragungstechnisch, z.B. über Bluetooth, mit der Ladestation verbindbar ist. Diese (auch als "Bedien-App" bezeichnete) App ist vorzugsweise zur Konfiguration und/oder Fernsteuerung der Ladestation eingerichtet und somit dazu ausgelegt, von einem Nutzer der Ladestation regelmäßig mit der Ladestation verbunden zu werden. Die App ist dabei dazu eingerichtet, die Prognosedaten immer dann auf die Ladestation zu übertragen, wenn die App mit der Ladestation verbunden ist; insbesondere immer dann, wenn sich das mobile Endgerät, auf dem die App installiert ist, in der Nähe der Ladestation befindet, oder wenn der Nutzer mittels dieser App die Ladestation bedient. Hierbei wird vorzugsweise nicht nur ein aktueller Prognosewert (z.B. für die kommende Stunde) übertragen, sondern eine Langzeitprognose, die Prognosedaten für mehrere Tage, beispielsweise für jede Stunde der kommenden 16 Tage, enthält. Immer dann, wenn die App wieder mit der Ladestation verbunden wird, wird die in der Ladestation hinterlegte Langzeitprognose mit aktualisierten Werten überspielt. In einer Variante dieser Ausführungsform wird mittels der App anhand der Prognosedaten eine angepasste Ladekurve berechnet. In diesem Fall wird - zusätzlich zu den oder anstelle der rohen Prognosedaten der zu erwartenden Netzauslastung - die anhand der Prognose angepasste Ladekurve auf die Ladestation übertragen, wenn das mobile Endgerät mit der Ladestation verbunden ist.

Ein großer Vorteil dieser Ausführungsformen liegt darin, dass die Ladestation selbst offline betrieben werden kann (und vorzugsweise auch wird). Bevorzugt ist die Ladestation dabei nicht mit Mitteln zur Verbindung der Steuerelektronik mit dem Internet ausgerüstet, was eine einfache und unaufwändige Realisierung der Ladestation ermöglicht. Ein weiterer Vorteil dieser Ausführungsform liegt darin, dass die Rechenkapazität des mobilen Endgeräts für die Beschaffung der Prognosedaten, und ggf. die Berechnung der angepassten Ladekurve genutzt werden kann. Dies erlaubt eine entsprechend kleinere Dimensionierung der Rechenleistung der Steuerelektronik.

Die Information über die tatsächliche Netzauslastung kann im Rahmen der Erfindung in Kombination mit einer hinterlegten Ladekurve oder unabhängig davon verwendet werden. In dem ersteren Fall wird beispielsweise die vorgegebene Ladekurve in Abhängigkeit von der Information über die tatsächliche Netzauslastung angehoben/abgesenkt oder skaliert. In dem letzteren Fall wird für die Anpassung des Vorgabewerts der Ladestromstärke insbesondere keine hinterlegte Ladekurve herangezogen. Vielmehr wird der Vorgabewert nur unter Berücksichtigung der Information über die tatsächliche Netzauslastung variiert.

In einer weiteren vorteilhaften Ausführung der Erfindung wird der Vorgabewert anhand eines von der Netzauslastung abhängigen Leitsignals eines Netzbetreibers bestimmt. Bei dem Leitsignal kann es sich im Rahmen der Erfindung um ein (binäres) Abschaltsignal handeln, durch das - insbesondere bei einer drohenden Netzüberlastung - der Vorgabewert des Ladestroms auf null gesetzt wird und durch das somit eine Unterbrechung eines laufenden Ladevorgangs veranlasst wird. Alternativ kann es sich bei dem Leitsignal auch um ein differenziertes Signal handeln, das zum Beispiel bei hoher Netzauslastung eine Reduzierung des Vorgabewerts auf einen vorgegebenen Prozentwert des Maximalladestroms veranlasst. Bevorzugt wird das Leitsignal - wenn verfügbar - zusätzlich zu der durchschnittlichen Netzauslastung und/oder der tatsächlichen Netzauslastung bei der Bestimmung des Vorgabewerts berücksichtigt. Beispielsweise wird hierbei das Leitsignal immer dann - z.B. anstelle der hinterlegten Ladekurve oder anstelle von Prognosewerten der zu erwartenden Netzauslastung - zur Ermittlung des Vorgabewerts herangezogen, wenn das Leitsignal der Ladestation zugeführt wird. Einem ggf. vorliegenden Leitsignal wird also Priorität eingeräumt. Immer dann, wenn das Leitsignal dagegen nicht vorliegt (z.B. weil die Übermittlung des Leitsignals gestört ist oder der Netzbetreiber ein solches Leitsignal nicht zur Verfügung stellt), werden ersatzweise andere Mittel zur Bestimmung des Vorgabewerts genutzt, z.B. eine hinterlegte Ladekurve oder Prognosewerte der zu erwartenden Netzauslastung.Alternativ hierzu wird in zweckmäßigen Ausführungen der Erfindung das Leitsignal derart mit der hinterlegten Ladekurve oder den Prognosewerten der zu erwartenden Netzauslastung kombiniert, dass der sich aus der Ladekurve bzw. den Prognosewerten ergebende Vorgabewert in Abhängigkeit von dem Leitsignal skaliert oder verschoben wird.

Häufig lässt die Ladeautomatik von Elektrofahrzeugen keine kontinuierliche Variation des Ladestroms zu, sondern ändert den Ladestrom in diskreten Stufen. Insbesondere fordert die Ladeautomatik von Elektrofahrzeugen in der Regel einen Mindestladestrom von z.B. 6A. Sofern der zur Verfügung stehende Ladestrom diesen (auch als Abschaltschwelle bezeichneten) Mindestladestrom unterschreitet, wird der Ladevorgang durch das Elektrofahrzeug vollständig unterbrochen. Erkanntermaßen könnte diese Abschaltschwelle - insbesondere bei Anwendung des erfindungsgemäßen Verfahrens - zu schockartigen Belastungsänderungen in dem Stromnetz führen, die unter gegebenen Umständen die Netzstabilität gefährden können. Ein solcher Fall könnte beispielsweise eintreten, wenn in einem regionalen Subnetz bei steigender Netzbelastung eine Vielzahl von nach dem erfindungsgemäßen Verfahren arbeitenden Ladestationen aufgrund einer hinterlegten Ladekurve, aufgrund der Information über die tatsächliche Netzauslastung oder aufgrund des Leitsignals des Energieversorgers gleichzeitig abschalten, so dass abrupt ein Vielfaches des Mindestladestroms frei wird.

Um solche für die Netzstabilität gefährliche schockartigen Belastungsänderungen zu vermeiden, wird im Zuge des Verfahrens vorzugsweise eine durch die Ladekurve, die Information über die tatsächliche Netzauslastung oder das Leitsignal des Energieversorgers veranlasste Änderung des Vorgabewerts, insbesondere eine Reduktion des Vorgabewerts auf null, nicht sofort durchgeführt, sondern mit einem Zeitversatz gegenüber dem auslösenden Ereignis. Bei nicht vorhersehbaren Ereignissen (z.B. einen Anstieg der tatsächlichen Netzauslastung oder eine Änderung des Leitsignals) wird der Vorgabewert dabei immer zeitverzögert nach dem Ereignis geändert (insbesondere auf null gesetzt). Im Falle einer fest hinterlegten Ladekurve kann der Vorgabewert alternativ auch bereits proaktiv (also mit einem negativen Zeitversatz vor dem auslösenden Ereignis) geändert, insbesondere auf null gesetzt werden. Der Zeitversatz wird hierbei in einer für die Ladestation oder den laufenden Ladezyklus spezifischen Weise variiert. Beispielsweise wird der Zeitversatz in Abhängigkeit von einer Dauer eines laufenden Ladezyklus, eines Ladestatus einer geladenen Fahrzeugbatterie, einer während des laufenden Ladezyklus geladenen Energiemenge, oder einer Zufallszahl variiert.

Der Zeitversatz kann dabei optional bei negativen Änderungen des Vorgabewerts (insbesondere Abschaltvorgängen) und positiven Änderungen des Vorgabewerts (insbesondere Wiederaufschaltvorgängen) gleich oder unterschiedlich gewählt sein. Vorzugweise ist der Zeitversatz beim Abschalten (also der Reduzierung des Vorgabewerts auf null) kürzer gewählt als beim Wiederaufschalten (also der Erhöhung des Vorgabewerts von null auf einen positiven Wert). Beispielsweise wird der Zeitversatz für das Abschalten derart bestimmt, dass die Ladestation je Minute der bisherigen Ladezeit in dem laufenden Ladzyklus um 15 Sekunden vor einem vorausbestimmten Abschaltzeitpunkt abschaltet. Wenn das E-Fahrzeug vor dem vorgesehenen Abschaltschaltzeitpunkt bereits 30 Minuten an der Ladestation geladen worden war, wird die Ladestation also z.B. bereits um einen Zeitversatz von 7,5 Minuten (nämlich 30 x 15 Sekunden) vor dem Abschaltzeitpunkt abgeschaltet. Für das Wiederaufschalten ist beispielsweise ein doppelter Zeitversatz von 30 Sekunden je Minute Ladezeit nach einem Wiederaufschaltzeitpunkt vorgesehen, so dass die Ladestation bei einer dem Abschalten vorausgegangenen Ladezeit von 30 Minuten um einen Zeitversatz von 15 Minuten nach dem Wiederaufschaltzeitpunkt den Ladevorgang wiederaufnimmt.

Zusätzlich oder alternativ zu dem zeitversetzten Abschalten und Wiederaufschalten der Ladestation ist optional vorgesehen, dass die Änderungsrate (also die zeitliche Flankensteilheit einer Änderung des Vorgabewerts) begrenzt wird. Beispielsweise wird die Änderungsrate des Vorgabewerts auf ein Ampere pro Minute begrenzt. Auch durch diese Begrenzung der Änderungsrate des Vorgabewerts werden schnelle (schockartige) Belastungsänderungen der Netzauslastung, die ansonsten zu Netzinstabilität führen können, gedämpft. Die Begrenzung der Änderungsrate des Vorgabewerts kann im Rahmen der Erfindung in dem gesamten Wertebereich des Vorgabewerts vorgesehen sein oder - bevorzugt - nur bei kleinen Vorgabewerten in der Nähe der Abschaltschwelle bzw. bei hoher Netzauslastung. Weiterhin kann der Grenzwert für negative Änderungsraten des Vorgabewerts (also für eine Erniedrigung des Vorgabewerts) gleich oder verschieden von dem Grenzwert für positive Änderungsraten des Vorgabewerts (also für eine Erhöhung des Vorgabewerts) gewählt werden. Beispielsweise werden die Erniedrigung des Vorgabewerts vor dem Abschalten auf 1 Ampere pro Minute und die Erhöhung des Vorgabewerts nach dem Wiederaufschalten auf 0,5 Ampere pro Minute begrenzt.

Allen vorstehend beschriebenen Varianten ist gemein, dass der Zeitversatz auch bei gleicher Konfiguration und gleicher Netzbelastung dennoch für verschiedene Ladestationen in der Regel unterschiedlich ist, so dass die Ladestationen auch unter gleichen Netzbedingungen zu unterschiedlichen Zeitpunkten den Vorgabewert ändern, insbesondere abschalten.

Die erfindungsgemäße Einrichtung zum Laden eines E-Fahrzeugs besteht in einfachen Ausführungen der Erfindung ausschließlich aus der Ladestation. In komplexeren Ausführungen der Erfindung umfasst die Einrichtung zusätzlich zu dieser (ersten) Ladestation mindestens ein Peripheriegerät, z.B.

- mindestens eine weitere Ladestation, die mit der ersten Ladestation Daten austauscht,
- ein übergeordnetes Steuergerät, das neben der (ersten) Ladestation optional mindestens eine gegebenenfalls vorhandene weitere Ladestation ansteuert,
- ein Programmiergerät, z.B. in Form einer Fernsteuerung, zur Konfiguration der Ladestation, und/oder
- einen Netzspannungssensor.

In einer besonders bevorzugten Ausführungsform umfasst die Einrichtung zusätzlich zu der Ladestation eine Software-Applikation (Bedien-App), die zur Konfiguration und/oder Fernsteuerung der Ladestation vorgesehen und eingerichtet ist, und die auf einem Smartphone oder Computer (z.B. einem Notebook oder Tablet) installierbar ist. Das Smartphone bzw. der Computer sind dabei in der Regel kein Bestandteil der erfindungsgemäßen Einrichtung und werden regelmäßig auch unabhängig von der Einrichtung hergestellt und vertrieben. Vielmehr werden das Smartphone bzw. der Computer von der Einrichtung lediglich als externe Ressource für Rechenleistung, Speicherplatz und Kommunikationsdienste genutzt (ähnlich wie das öffentliche Stromnetz von der Einrichtung nur als Ressource für elektrische Leistung genutzt wird, ohne dadurch zu einem Bestandteil der Einrichtung zu werden). Die Bedien-App ist mit der Ladestation oder einem gegebenenfalls vorhandenen externen Steuergerät der Einrichtung vorzugsweise über eine drahtlose Datenübertragungsstrecke (insbesondere mittels Bluetooth oder Mobilfunk) verbindbar. Die Bedien-App nutzt hierfür eine entsprechende Sende- und Empfangseinheit des Smartphones bzw. Computers.

Vorzugsweise kann eine Reduktion des Vorgabewerts, insbesondere eine Reduktion des Vorgabewerts auf null, durch einen Nutzerbefehl ("Override-Befehl") überschrieben werden, so dass durch den Nutzer eine Ladung des E-Fahrzeugs mit einem höheren Ladestrom, insbesondere mit maximalem Ladestrom, erzwungen werden kann. Der Override-Befehl kann allerdings seitens des Netzbetreibers an eine besondere Gebühr oder einen besonderen Stromtarif gebunden sein. In einer zweckmäßigen Ausführung der Erfindung ist die Ladestation vor diesem Hintergrund dazu eingerichtet, den Override-Befehl an einen Netzbetreiber oder einen Stromzähler der lokalen Stromverteilung zu melden, um die besondere Gebühr bzw. den besonderen Stromtarif auszulösen.

Die erfindungsgemäße Einrichtung ist allgemein zur Durchführung des vorstehend beschriebenen, erfindungsgemäßen Verfahrens eingerichtet. Ausführungsformen des Verfahrens korrespondieren daher mit entsprechenden Ausführungsformen der Einrichtung. Erläuterungen zu Varianten des Verfahrens und deren jeweilige Effekte und Vorteile sind entsprechend auf die Einrichtung zu übertragen, und umgekehrt.

Konkret umfasst die Einrichtung eine Ladestation der vorstehend beschriebenen Art, die entweder unmittelbar oder mittelbar über eine lokale Stromverteilung (insbesondere eine elektrische Haustrominstallation) an ein öffentliches Stromnetz anschließbar ist, um einen Ladestrom für ein Elektrofahrzeug zur Verfügung zu stellen. Die Einrichtung umfasst weiterhin eine Steuerelektronik, die dazu eingerichtet ist, einen Ladevorgang zum Aufladen eines E-Fahrzeugs freizugeben und hierbei einen Vorgabewert der Ladestromstärke zeitlich variierend, insbesondere kontinuierlich oder in mehreren Stufen variierend, vorzugeben, so dass der Vorgabewert gegenläufig zu einer Netzauslastung des Stromnetzes variiert. Vorzugsweise ist die Steuerelektronik dazu eingerichtet, den Vorgabewert der Ladestromstärke anhand einer in der Ladestation oder einem externen Datenspeicher hinterlegten Ladekurve, insbesondere in Form einer zeitabhängigen mathematischen Funktion oder Stützpunkttabelle, zu bestimmen. Die Steuerelektronik ist vorzugsweise (vollständig) in der Ladestation selbst integriert. In alternativer Ausführung ist die Steuerelektronik in einem externen Steuergerät angeordnet, das insbesondere mehrere Ladestationen gemeinsam steuert. In wiederum einer anderen alternativen Ausführung ist ein Teil der Steuerelektronik in der Ladestation selbst integriert, während eine anderer Teil der Steuerelektronik in einem externen Steuergerät angeordnet ist.

Die Steuerelektronik umfasst vorzugsweise ein programmierbares Bauteil, z.B. einen Mikroprozessor oder Einplatinen-Computer, in dem eine die Funktionen der Steuerelektronik implementierende Software (Firmware) lauffähig installiert ist. Alternativ hierzu kann die Steuerelektronik auch durch einen nicht-programmierbaren Hardwareschaltkreis (z.B. in Form eines ASIC) gebildet sein. Wiederum alternativ kann die Steuerelektronik durch eine Kombination aus programmierbaren und/oder nicht-programmierbaren Komponenten gebildet sein.

In einer vorteilhaften Ausführungsform der Einrichtung ist als Ladekurve eine Netzauslastungskurve vorgegeben, die die durchschnittliche Netzauslastung an dem geographischen Standort der Ladestation oder in dem abgegrenzten Netzbereich, in dem die Ladestation angeschlossen ist, spezifisch wiedergibt. Die Steuerelektronik ist dabei dazu eingerichtet, den Vorgabewert anhand des Abstands eines aktuellen Werts der Netzauslastungskurve zu einem vorgegebenen Schwellwert zu bestimmen. Alternativ hierzu kann die Ladekurve im Rahmen der Erfindung auch so vorgegeben sein, dass sie gegenläufig zu der durchschnittlichen Netzauslastung an dem geographischen Standort bzw. dem abgegrenzten Netzbereich variiert.

Vorzugsweise ist die Steuerelektronik dazu eingerichtet, den Vorgabewert der Ladestromstärke in Abhängigkeit von einer Information über die (aktuelle oder prognostizierte) tatsächliche Netzauslastung an dem geographischen Standort der Ladestation oder in dem abgegrenzten Netzbereich, in dem die Ladestation angeschlossen ist, zu variieren. Bei Feststellung einer hohen Netzauslastung wird hierbei insbesondere der Vorgabewert auf geringere Werte ausgeregelt als bei niedriger Netzauslastung.

Die Steuerelektronik sind in vorteilhafter Ausführung dazu eingerichtet, als Information über die tatsächliche Netzauslastung Messdaten eines in die Ladestation integrierten oder mit der Ladestation verbundenen Netzspannungssensors oder Netzfrequenzsensors und/oder Prognosedaten bezüglich einer zu erwartenden Netzbelastung heranzuziehen. Die vorstehend genannten Sensoren können ein eigener Bestandteil der erfindungsgemäßen Einrichtung ein. Alternativ kann die Steuerelektronik im Rahmen der Erfindung aber auch auf Daten externer Sensoren, z.B. Sensoren eines Smarthome-Systems, etc. zugreifen.

Zusätzlich oder alternativ ist die Steuerelektronik zum (drahtlosen oder drahtgebundenen) Empfang eines von der Netzauslastung abhängigen Leitsignals eines Netzbetreibers eingerichtet. Die Steuerelektronik ist hierbei dazu eingerichtet, den Vorgabewert (gegebenenfalls auch) anhand des Leitsignals zu bestimmen.

In einer vorteilhaften Ausführung ist die Steuerelektronik dazu eingerichtet, eine durch die Ladekurve, die Information über die tatsächliche Netzauslastung oder das Leitsignal des Energieversorgers veranlasste Änderung des Vorgabewerts, insbesondere eine Reduktion des Vorgabewerts auf null, mit einem Zeitversatz durchzuführen, und den Zeitversatz in einer für die Ladestation oder den laufenden Ladezyklus spezifischen Weise zu variieren. Insbesondere wird der Zeitversatz durch die Steuerelektronik dabei in Abhängigkeit einer Dauer eines laufenden Ladezyklus, eines Ladestatus einer geladenen Fahrzeugbatterie, einer während des laufenden Ladezyklus geladenen Energiemenge, oder einer Zufallszahl variiert.

Optional sind die Ladestation oder ein gegebenenfalls vorhandenes externes Steuergerät der Einrichtung mit einer Kommunikationselektronik, beispielsweise einem Mobilfunk-, LAN- und/oder WLAN-Adapter, zum drahtgebundenen oder drahtlosen Datenaustausch mit einem entfernten Server, insbesondere im Internet, ausgerüstet, z.B. um Prognosedaten bezüglich der zu erwartenden Netzbelastung selbstständig abzurufen.

Die Ladestation umfasst weiterhin optional einen Empfänger für Signale eines globalen Positionsbestimmungssystems (z.B. einem GPS-Empfänger). Die Steuerelektronik ist hierbei dazu eingerichtet, den geographischen Standort der Ladestation selbsttätig zu bestimmen. Alternativ ist die Steuerelektronik dazu eingerichtet, mittels des genannten Empfängers den geographischen Standort der Ladestation durch Kommunikation mit einem Datenübertragungsnetzwerk (z.B. einem Mobilfunk oder WLAN-Netz) selbsttätig zu bestimmen. Wiederum alternativ wird der geographische Standort der Ladestation im Rahmen der Erfindung auch manuell (z.B. mittels der vorstehend beschriebenen Bedien-App) in der Steuerelektronik hinterlegt oder automatisch durch die gegebenenfalls vorhandene Bedien-App ermittelt und an die Ladestation übertragen oder bei der Erstellung der Ladekurve berücksichtigt. In besonders einfachen Ausführungen ist die Ladestation alternativ ausschließlich für einen Offline-Betrieb vorgesehen. In diesen Ausführungen umfasst die Ladestation vorzugsweise keine Schnittstellen zur Kommunikation mit einem WLAN- oder Mobilfunknetz.

Die Ladestation ist vorzugsweise mit einer Echtzeituhr ausgestattet, um den Vorgabewert in Abhängigkeit der Tageszeit sowie optional des Wochentages und/oder der Stellung des aktuellen Tages im Jahr zu ermitteln.

Eine Kommunikation zwischen der Ladestation und einem Stromzähler oder sonstigen Strommessgerät ist bei allen vorstehend beschriebenen Ausführungsbeispielen nicht erforderlich und daher vorzugsweise auch nicht vorgesehen.

Optional ist die Ladestation auch zur Rückspeisung von elektrischer Energie aus der Fahrzeugbatterie in die lokale Stromverteilung eingerichtet, von wo aus die rückgespeiste Energie wiederum optional ganz oder teilweise in das Stromnetz zurückgeführt wird. Diese Rückspeisefähigkeit ist insbesondere bei Ausführungsformen der Erfindung bevorzugt vorgesehen, bei denen die Ladestation als Gleichstrom-Ladestation ausgebildet ist. Im Rahmen des Verfahrens und der zugehörigen Einrichtung ist dabei der Vorgabewert der Ladestromstärke insbesondere derart vorgebbar, dass er auch einen oder mehrere negative Werte annehmen kann. Im Falle eines negativen Vorgabewerts wird anstelle eines der Fahrzeugbatterie zugeführten Ladestroms ein (ein maximal dem Vorgabewert entsprechender) Rückspeisestrom aus der Fahrzeugbatterie abgerufen. Bei Ausführungsformen der Erfindung, bei denen der Vorgabewert durch eine Lastkurve bestimmt ist, ist diese Netzauslastungskurve insbesondere derart vorgeben, dass der Vorgabewert in Zeiten besonders hoher Netzauslastung vorübergehend negativ wird. Alternativ kann eine solche Vorzeichenumkehr des Vorgabewerts im Rahmen der Erfindung auch durch die Information über die tatsächliche Netzauslastung oder das Leitsignal des Energieversorgers veranlasst werden.

In allen vorstehend beschriebenen Ausführungsformen der Erfindung weist die Ladestation vorzugsweise ein (fest mit der Ladestation verbundenes) Ladekabel für ein zu ladendes E-Fahrzeug oder eine Anschlussdose (Steckdose) zum Anschluss eines Ladekabels eines zu ladenden E-Fahrzeugs auf.

Nachfolgend werden Ausführungsbeispiele der Erfindung anhand einer Zeichnung näher erläutert. Darin zeigen:

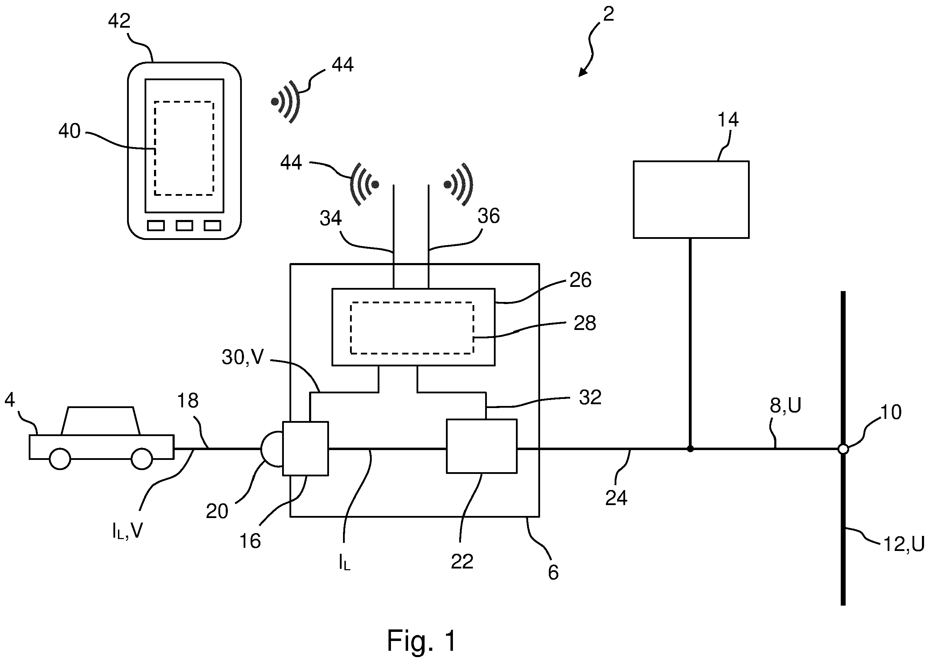

Fig. 1 in einem schematischen Blockschaltbild eine Einrichtung zum Laden eines Elektro-Fahrzeugs (E-Fahrzeug), mit einer Ladestation, die über eine lokale Stromverteilung (hier beispielhaft eine elektrische Haustrominstallation) an ein öffentliches Stromnetz anschließbar ist, wobei die Ladestation einen Vorgabewert der Ladestromstärke anhand einer hinterlegten, zeitabhängigen Netzauslastungskurve bestimmt, so dass der Vorgabewert gegenläufig zu dem durchschnittlichen Verlauf der Netzauslastung des Stromnetzes an dem geographischen Standort der Ladestation variiert,

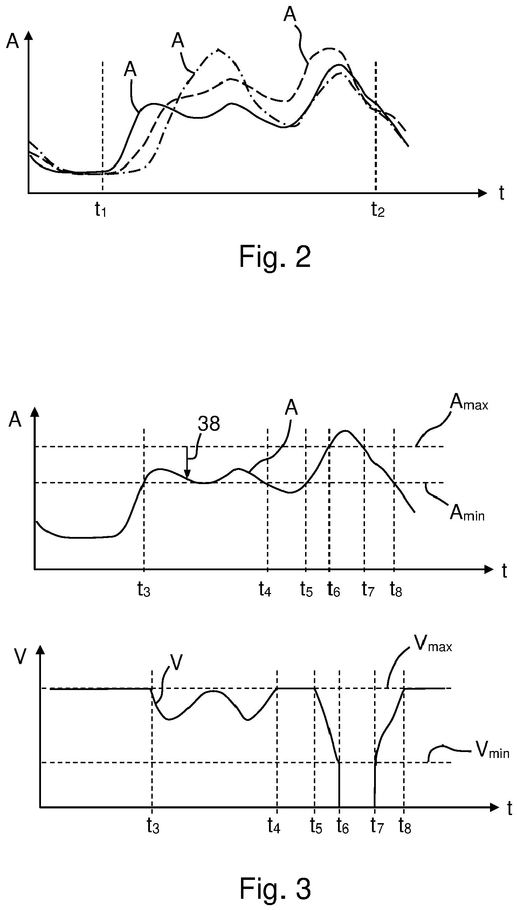

Fig. 2 in einem schematischen Diagramm gegen die Zeit drei typische Tagesverläufe der Netzauslastung im Winter, nämlich einen Tagesverlauf der Netzauslastung für einen Werktag (durchgezogene Linie), einen Tagesverlauf der Netzauslastung für einen Samstag (gestrichelte Linie) und einen Tagesverlauf der Netzauslastung für einen Sonntag (strichpunktierte Linie),

Fig. 3 in zwei übereinander angeordneten, chronologischen Diagrammen den Tagesverlauf der Netzauslastung für einen Werktag aus Fig. 2 sowie einen oberen Schwellwert und einen unteren Schwellwert für die Netzauslastung (oberes Diagramm) und den Verlauf des aus dem Abstand der Netzauslastung zu dem oberen Schwellwert abgeleiteten Vorgabewerts der Ladestromstärke (unteres Diagramm),

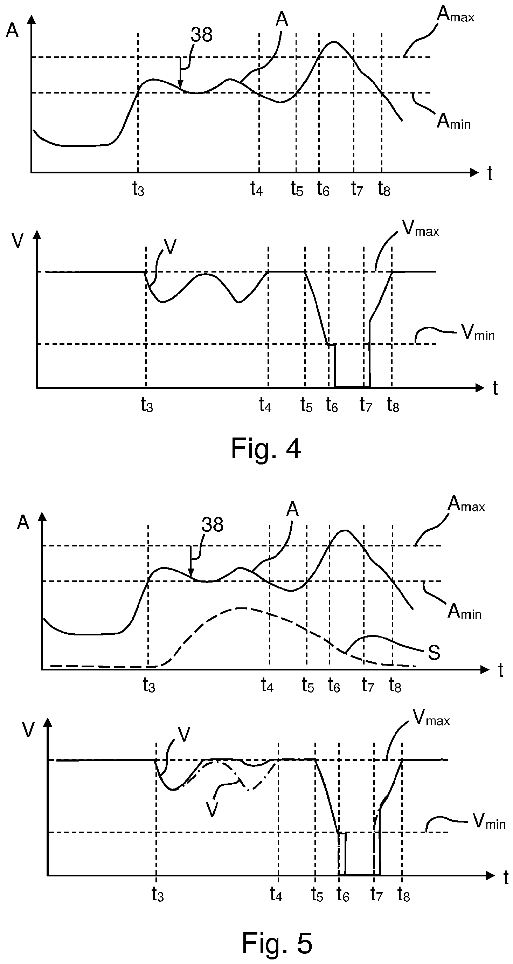

Fig. 4 in Darstellung gemäß Fig. 3 wiederum den Tagesverlauf der Netzauslastung für einen Werktag aus Fig. 2 (oberes Diagramm) sowie den Verlauf des Vorgabewerts der Ladestromstärke (unteres Diagramm), wobei der Vorgabewert nach einem alternativen Verfahren aus dem Abstand der Netzauslastung zu dem oberen Schwellwert abgeleitet ist, und

Fig. 5 in Darstellung gemäß Fig. 3 und 4 wiederum den Tagesverlauf der Netzauslastung für einen Werktag aus Fig. 2 (oberes Diagramm) sowie den Verlauf des Vorgabewerts der Ladestromstärke (unteres Diagramm), wobei bei der Bestimmung des Vorgabewerts zusätzlich die durchschnittliche Änderung der Sonneneinstrahlung im Tagesverlauf berücksichtigt ist.

Einander entsprechende Teile und Größen sind in allen Figuren stets mit gleichen Bezugszeichen versehen.

Fig. 1 zeigt eine Einrichtung 2 zum Laden eines Elektrofahrzeugs (E-Fahrzeug 4). Die Einrichtung 2 umfasst eine Ladestation 6, insbesondere in Form einer wandmontierten Wallbox. In dem dargestellten Beispiel ist die Ladestation 6 in eine elektrische Haustrominstallation 8 eingebunden, die wiederum an einem Netzverknüpfungspunkt 10 an ein öffentliches Stromnetz 12 (nämlich ein dreiphasiges Wechselstrom-Niederspannungsnetz) angeschlossen ist. In die Hausstrominstallation 8 ist neben der Ladestation 6 und weiteren (nicht näher dargestellten elektrischen Verbrauchern) optional eine Photovoltaikanlage (PV-Anlage 14) geschaltet.

Die Ladestation 6 umfasst eine Anschlussdose 16 (d.h. eine Steckdose, insbesondere gemäß IEC 62196 Typ 2), an die ein Ladekabel 18 des E-Fahrzeugs 4 mit einem entsprechenden Ladestecker 20 anschließbar ist. Alternativ zu der Anschlussdose 16 kann die Ladestation 6 auch mit einem fest angebrachten Ladekabel versehen sein.

Zusätzlich zu der Anschlussdose 16 umfasst die Ladestation 6 einen elektrischen Leistungsschalter 22, der in eine die Hausstrominstallation 8 mit der Anschlussdose 16 verbindende Hauptstromleitung 24 der Ladestation 6 schaltbar ist, um einen dem E-Fahrzeug 4 zuzuführenden Ladestrom $I_L$ freizugeben oder zu sperren.

Die Ladestation 6 umfasst außerdem eine Steuerelektronik 26, die beispielsweise durch einen Mikrocontroller oder einen Einplatinen-Computer gebildet ist. Die nachstehend näher beschriebenen Funktionen der Steuerelektronik 26 sind dabei in Form einer Software (Firmware 28) implementiert, die lauffähig in der Steuerelektronik 26 installiert ist. Die Steuerelektronik 26 ist über Datenleitungen 30 und 32 mit der Anschlussdose 16 bzw. dem Leistungsschalter 22 verbunden.

Die Steuerelektronik 26 umfasst weiterhin eine nur angedeutete erste Sende- und Empfangseinheit (Transceiver 34), die eine drahtlose Kommunikation der Steuerelektronik 26 mit weiteren elektronischen Geräten, z.B. mittels Bluetooth, ermöglicht.

Optional umfasst die Steuerelektronik 26 weiterhin eine ebenfalls nur angedeutete zweite Sende- und Empfangseinheit (Transceiver 36), die eine drahtlose Kommunikation der Steuerelektronik 26 mit einer Leitstelle des Netzbetreibers, ermöglicht. Der Transceiver 36 ist beispielsweise als Mobilfunk- oder WLAN-Transceiver ausgebildet und stellt eine datenübertragungstechnische Verbindung mit der Leitstelle über ein Mobilfunknetz bzw. über das Internet her. Zusätzlich oder alternativ zu dem Transceiver 36 umfasst die Steuerelektronik 26 eine Schnittstelle zur drahtgebundenen Kommunikation mit der Leitstelle. Bei der Leitstelle handelt es sich vorzugsweise um eine technische (insbesondere vollautomatisierte) Einrichtung welche die Netzauslastung erfasst und den Zustand mittels eines Leitsignals übermittelt. Die Leitstelle kann an beliebiger Stell im Stromnetz angeordnet sein, beispielsweise in einem Netzverknüpfungspunkt zwischen zwei Netzebenen, z.B. also einem Umspannwerk oder einer Transformatorstation.

Im Betrieb versorgt die Ladestation 6 das zu ladende und hierzu mittels des Ladekabels 18 an die Ladestation 6 angeschlossene E-Fahrzeug 4 mit dem Ladestrom II.

Die Steuerelektronik 26 initiiert einen Ladevorgang auf Anforderung eines Nutzers oder bei Erkennung des angeschlossenen E-Fahrzeugs 4, indem sie einerseits den Leistungsschalter 22 durch entsprechende Ansteuerung über die Datenleitung 32 schließt (d.h. leitend schaltet) und andererseits durch Kommunikation mit einer Ladesteuerung des E-Fahrzeugs 4 (über die Datenleitung 30, die Anschlussdose 16 und das Ladekabel 18) den Ladevorgang freigibt. Hierbei gibt die Steuerelektronik 26 an die Ladesteuerung des E-Fahrzeugs 4 auch einen Vorgabewert V aus, der die maximale Ladestromstärke des von dem E-Fahrzeug 4 aus der Ladestation 6 zu beziehenden Ladestroms $I_L$ angibt. Der Vorgabewert V wird von der Steuerelektronik 26 im Beispiel gemäß Fig. 1 und 2 als quasi-kontinuierlich (d.h. in vielen kleinen Stufen) zwischen einem Minimalwert $V_{min}$ (z.B. entsprechend einer Ladestromstärke von 6A) und einem Maximalwert $V_{max}$ (z.B. entsprechend einer Ladestromstärke von 16A) variable Größe ausgegeben. In Zeiten, in denen kein Ladevorgang stattfinden soll, hat der Vorgabewert V vorzugsweise abweichend den Wert null.

Die Steuerelektronik 26 bestimmt den Vorgabewert V dabei anhand einer in der Ladestation 6 selbst (insbesondere in einem Datenspeicher der Steuerelektronik 26) in Abhängigkeit von der Zeit t hinterlegten Ladekurve.

In dem in Fig. 1 dargestellten Beispiel ist die Ladekurve gegenläufig zu dem angestrebten Verlauf des Vorgabewerts V vorgegeben, so dass sie den Verlauf der durchschnittlichen Netzauslastung des Stromnetzes 12 an dem geographischen Standort der Ladestation 6, beispielsweise als Prozentwert relativ zur Maximalauslastung des Stromnetzes 12 wiedergibt. Die so definierte Ladekurve ist nachfolgend auch als Netzauslastungskurve A (A = A(t)) bezeichnet. In Fig. 2 sind drei beispielhafte Ausschnitte der Netzauslastungskurve A gegen die Zeit t dargestellt, die jeweils etwa einem typischen Tagesverlauf der Netzauslastung in einem geographischen Gebiet mit Wohnbebauung entsprechen; die mit gestrichelten senkrechten Linien gekennzeichneten Zeitpunkte $t_1$ und $t_2$ entsprechen beispielhaft 4:00 Uhr morgens und 21:00 Uhr abends. Mit einer durchgezogenen Linie ist in Fig. 2 der durchschnittliche Tagesverlauf der Netzauslastung an einem Werktag (Montag bis Freitag) dargestellt. Mit einer gestrichelten Linie ist im Vergleich hierzu der durchschnittliche Tagesverlauf der Netzauslastung an einem Samstag dargestellt. Mit einer strichpunktierten Linie ist schließlich der durchschnittliche Tagesverlauf der Netzauslastung an einem Sonntag dargestellt.

Der Darstellung gemäß Fig. 2 ist zu entnehmen, dass die durchschnittliche Netzauslastung an Werktagen einen Tagesverlauf mit drei ausgeprägten Maxima (Peaks) aufweist, nämlich einem Morgen-Peak, einem Mittags-Peak und einem Abend-Peak. Am Wochenende tritt der Morgen-Peak typischerweise verspätet auf und verschmilzt insbesondere mehr oder weniger stark mit dem Mittags-Peak. Zudem treten am Wochenende typischerweise im Vergleich zu Werktagen erhöhte Spitzenwerte der Netzauslastung auf.

Fig. 2 zeigt den typischen Verlauf der Netzauslastung im Winter. In den Sommer-Monaten ist typischerweise der Mittags-Peak stärker ausgeprägt, da hier in der Tagemitte vermehrt elektrische Energie zum Kühlen verbraucht wird. Dagegen sind der Morgen-Peak und der Abend-Peak in den Sommer-Monaten typischerweise schwächer ausgeprägt, da weniger elektrische Energie für Beleuchtung und Wärme verbraucht wird. Wiederum anders verhält sich die Netzauslastung in Industriegebieten, wobei auch hier charakteristische Unterschiede im Wochen- und Jahresverlauf auftreten.

Diese Unterschiede der durchschnittlichen Netzauslastung im Wochen- und Jahresverlauf werden bei der Bestimmung des Vorgabewerts V dadurch berücksichtigt, dass die Netzauslastungskurve A vorzugsweise über das gesamte (Kalender-) Jahr definiert ist. Beispielsweise ist die Netzauslastungskurve A in Form einer Stützstellentabelle realisiert, die im Rahmen einer vorgegebenen zeitlichen Auflösung (z.B. im Abstand von jeweils 5 Minuten) für jeden Zeitpunkt im Jahresverlauf einen bestimmten zugeordneten Wert aufweist. Die Steuerelektronik 26 weist beispielsweise eine Echtzeituhr auf und liest anhand der von dieser Uhr ausgegebenen Zeit t (also z.B. alle 5 Minuten) sukzessive Wert für Wert aus der Stützstellentabelle aus.

Die Steuerelektronik 26 bestimmt dabei den Vorgabewert, indem sie den aktuellen Wert A(t) der hinterlegten Netzauslastungskurve A von einem vorgegebenen Schwellwert $A_{max}$ subtrahiert und - vorzugsweise - die Differenz mit einem vorgegebenen Proportionalitätsfaktor k multipliziert:

$$V = k \cdot ( A_{max} - A(t) ) + V_{min} \quad \text{für } V_{max} \geq k \cdot ( A_{max} - A(t) ) + V_{min} \geq V_{min}$$
$$V = V_{max} \quad \text{für } k \cdot ( A_{max} - A(t) ) + V_{min} > V_{max}$$
$$V = 0 \quad \text{sonst}$$

Aus den obigen Gleichungen ist ersichtlich, dass der Vorgabewert V auf null erniedrigt wird, wenn der aktuelle Wert A(t) der hinterlegten Netzauslastungskurve A den Schwellwert $A_{max}$ überschreitet. Andererseits wird der Vorgabewert V bei geringer Netzauslastung auf den Maximalwert $V_{max}$ begrenzt.

Dieses Verfahren zur Bestimmung des Vorgabewerts V ist in den beiden Diagrammen der Fig. 3 veranschaulicht. In dem oberen Diagramm ist hierbei wiederum der Tagesverlauf der Netzauslastungskurve A für einen Werktag gemäß Fig. 2 dargestellt. Zusätzlich sind in dem oberen Diagramm der Fig. 3 der Schwellwert $A_{max}$ und ein weiterer Schwellwert $A_{min}$ eingetragen. Durch einen Pfeil 38 ist die Differenz des aktuellen Werts A(t) der Netzauslastungskurve A von dem Schwellwert $A_{max}$ veranschaulicht. Der zweite Schwellwert $A_{min}$ begrenzt einen Regelbereich der Netzauslastung, in dem eine Einschränkung des Ladestroms $I_L$ durch die Ladestation 6 sinnvoll ist, nach unten. Solange dieser zweite Schwellwert $A_{min}$ unterschritten wird, wird der Vorgabewert durch die Ladestation 6 auf den Maximalwert Vmax gesetzt.

Dies ist aus dem unteren Diagramm der Fig. 3 ersichtlich, in dem der Verlauf des nach dem vorstehend beschriebenen Prinzip ermittelten Vorgabewerts V gegen die Zeit t angetragen ist.

In dem Vergleich der beiden Diagramme der Fig. 3 ist zu erkennen, dass zu einem Zeitpunkt ts, beispielsweise etwa um 7:00 Uhr morgens, der aktuelle Wert A(t) der Netzauslastungskurve A erstmals im Verlauf des Tages den zweiten Schwellwert $A_{min}$ überschreitet, worauf die Steuerelektronik 26 den Vorgabewert V gegenläufig zu dem weiteren Verlauf der Netzauslastung reduziert.

Während einer von zwei Zeitpunkten $t_4$ und ts begrenzten Zeitspanne zwischen dem Mittags-Peak und dem Abend-Peak, z.B. etwa zwischen 15:00 Uhr und 16:30 Uhr, fällt die durchschnittliche Netzbelastung in dem dargestellten Beispiel vorübergehend unter den zweiten Schwellwert $A_{min}$ ab, so dass in diesem Zeitintervall der Vorgabewert V wieder auf den Maximalwert $V_{max}$ gesetzt wird. Während des Abend-Peaks, zwischen Zeitpunkten $t_6$ und $t_7$ (z.B. zwischen 17:45 Uhr und 19:45 Uhr), überschreitet die Netzauslastung den oberen Schwellwert $A_{max}$. Entsprechend setzt die Steuerelektronik 26 den Vorgabewert V in dieser Zeitspanne auf null und unterbricht somit einen ggf. laufenden Ladevorgang. Zu einem Zeitpunkt $t_8$ (z.B. etwa um 22:15) fällt die durchschnittliche Netzauslastung unter den zweiten Schwellwert $A_{min}$, so dass der Vorgabewert wieder auf den Maximalwert $V_{max}$ gesetzt wird.

In einer Variante der Einrichtung 2 erhält die Steuerelektronik 26 über ein Mobilfunknetz oder das Internet und den Transceiver 36 ein von der tatsächlichen Netzauslastung abhängiges Leitsignal des Netzbetreibers, das einen Richtwert für den Vorgabewert V festlegt und das von der Steuerelektronik 26 alternativ oder zusätzlich zu der hinterlegten Netzauslastungskurve A berücksichtigt wird. Beispielsweise ist die Steuerelektronik 26 dazu eingerichtet, den Vorgabewert V immer dann anhand des Leitsignals zu bestimmen, wenn dieser zur Verfügung steht, und alternativ den Vorgabewert V anhand der hinterlegten Netzauslastungskurve A zu bestimmen. Die Ausführung der Steuerelektronik 26 ermöglicht, dieselbe Ladestation 6 sowohl online (mit Verbindung zu der Leitstelle des Netzbetreibers) als auch offline (ohne Verbindung zu der Leitstelle des Netzbetreibers) netzfreundlich zu betreiben.

In einer weiteren Variante der Einrichtung 2 bestimmt die Steuerelektronik 26 den Vorgabewert V grundsätzlich in der vorstehend beschriebenen und in Fig. 3 veranschaulichten Weise. Allerdings schaltet die Steuerelektronik 26 - wie in Fig. 4 veranschaulicht ist - den Vorgabewert V, wenn der aktuelle Wert A(t) der Netzauslastungskurve A den oberen Schwellwert $A_{max}$ überschreitet oder wenn das ggf. empfangene Leitsignal eine Erniedrigung des Vorgabewerts V auf null fordert, den Vorgabewert V nicht sofort von dem Mindestwert $V_{min}$ auf null. Vielmehr belässt die Steuerelektronik 26 den Vorgabewert V in diesem Fall (in dem dargestellten Beispiel zu dem Zeitpunkt $t_6$) zunächst für einen vorgegebene Zeitversatz auf dem Mindestwert $V_{min}$, und schaltet den Vorgabewert V erst nach Ablauf des Zeitversatzes auf null, sofern dann aktuelle Wert A(t) der Netzauslastungskurve A den oberen Schwellwert $A_{max}$ dann noch immer überschreitet. Der Zeitversatz ist dabei für jede Ladestation 6, und bevorzugt auch für Abschaltvorgang, unterschiedlich gewählt. Beispielsweise wird der Zeitversatz in Abhängigkeit von der Dauer eines laufenden Ladezyklus, von dem Ladestatus einer geladenen Fahrzeugbatterie oder von einer während des laufenden Ladezyklus geladenen Energiemenge variiert. Der Zeitversatz wird dabei insbesondere umso kürzer gewählt, je länger das zu ladende E-Fahrzeug 4 schon geladen wird (also einen von null verschiedenen Ladestrom $I_L$ zieht), je mehr die Fahrzeugbatterie bereits aufgeladen ist oder je mehr elektrische Energie in dem laufenden Ladezyklus bereits geladen wurde. In einer alternativen Ausführung der Erfindung wird der Zeitversatz nach Maßgabe einer Zufallszahl bestimmt, wobei diese Zufallszahl entweder einmalig und spezifisch für jede Ladestation 6 oder bei jedem Abschaltvorgang erneut bestimmt wird. Durch alle oben beschriebenen Maßnahmen wird der Effekt erzielt, dass mehrere nach dem erfindungsgemäßen Verfahren arbeitende Ladestationen 6 auch unter gleichen Netzbedingungen in der Regel nicht gleichzeitig den Vorgabewert auf null absenken. Somit werden schockartige Änderungen der Netzbelastung infolge gleichzeitiger Abschaltung einer Vielzahl von Ladestationen 6 vermieden.

In einer weiteren Ausführungsform der Einrichtung 2 wird die Änderungsrate des Vorgabewerts V auf vorgegebenen Grenzwerte, z.B. auf maximal 1 Ampere pro Minute für die Erniedrigung des Vorgabewerts V und maximal 0,5 Ampere pro Minute für die Erhöhung des Vorgabewerts V, begrenzt. Dies führt bei dem in Fig. 3 und 4 dargestellten Verlauf der Netzauslastungskurve A dazu, dass im Bereich der Zeitpunkte $t_6$ und $t_7$ (also vor dem Abschalten und nach dem Wiederaufschalten) der Vorgabewert V nur mit begrenzter Flankensteilheit erniedrigt bzw. erhöht wird.

Zur Konfiguration der Ladestation 6 weist die Einrichtung 2 gemäß Fig. 1 zusätzlich zu der Ladestation 4 eine Software-Applikation (nachfolgend Bedien-App 40) auf, die in dem dargestellten Beispiel auf einem Smartphone 42 installiert ist. Anders als die Bedien-App 40 ist das Smartphone 42 hierbei kein Bestandteil der Einrichtung 2, sondern wird von dieser nur als externe Ressource für Rechenleistung, Speicherplatz und Kommunikationsdienste genutzt.

Vor der Inbetriebnahme der Ladestation 6 wird die Bedien-App 40 mit der Firmware 28 der Steuerelektronik 26 über eine insbesondere drahtlose Datenübertragungsstrecke 44 (vorzugsweise mittels Bluetooth) verbunden. Die Bedien-App 40 greift hierbei auf eine entsprechende Sende- und Empfangseinheit des Smartphones 42 zu, die eine datenübertragungstechnische Verbindung zu dem Transceiver 34 der Ladestation 6 herstellt.

Mittels der Bedien-App 40 kann dann ein Nutzer (insbesondere ein Techniker oder ein Besitzer der Ladestation 6) die spezifisch für den Standort der Ladestation 6 berechnete Netzauslastungskurve A in einem Speicher der Steuerelektronik 26 abspeichern. Die Netzauslastungskurve A wird vorzugsweise zuvor durch den Netzbetreiber oder einen Dienstleister berechnet und über das Internet auf das Smartphone 42 heruntergeladen. Im Betrieb der Ladestation 6 ist eine datenübertragungstechnische Verbindung der Ladestation 6 zu der Bedien-App 36 nicht erforderlich und regelmäßig auch nicht vorhanden. Allerdings dient die Bedien-App 40 optional auch als Fernbedienung für Ladestation 6, z.B. zum Auslösen oder Abbrechen von Ladevorgängen und wird in diesem Fall in regelmäßigen oder unregelmäßigen Zeitabständen vorübergehend mit der Ladestation 6 verbunden.

In einer Variante der Einrichtung 2 wird anstelle einer unveränderlichen Netzauslastungskurve A eine Langzeitprognose der zu erwartenden Netzauslastung als Netzauslastungskurve A in die Steuerelektronik 26 eingespeichert. Von der durchschnittlichen Netzauslastung unterscheidet sich die Langzeitprognose dadurch, dass absehbare Abweichungen von den Durchschnittswerten der Netzauslastung, z.B. aufgrund von absehbaren Wetterereignissen, in der Netzauslastungskurve A berücksichtigt werden. In der Regel weicht die Langzeitprognose dabei um so stärker von der durchschnittlichen Netzauslastung ab und gibt die tatsächliche Netzauslastung um so genauer wieder, je näher der prognostizierte Zeitpunkt an der Gegenwart liegt. Für Zeitpunkte in weiter entfernter Zukunft geht die Langzeitprognose in die durchschnittliche Netzausauslastung über.

Die anhand der Langzeitprognose berechnete Netzauslastungskurve A wird durch den Netzbetreiber oder Dienstleister in kurzen Zeitabständen (z.B. alle zwei Stunden) aktualisiert. Die aktualisierte Netzauslastungskurve A wird immer dann von der Bedien-App 40, z.B. über das Internet, heruntergeladen und in dem Speicher der Steuerelektronik 26 der Ladestation 6 abgespeichert, wenn die Bedien-App 40 mit der Steuerelektronik 26 verbunden ist.

In einer weiteren Variante der Erfindung misst die Steuerelektronik 26 fortlaufend den Betrag der Netzspannung U als Maß für die tatsächliche Netzauslastung. Sie vergleicht dabei die tatsächliche Netzauslastung mit durchschnittlichen Netzauslastung (also dem aktuellen Wert der hinterlegten Netzauslastungskurve) und korrigiert den Vorgabewert V bei signifikanten Abweichung nach. Beispielsweise ist hierzu der Proportionalitätsfaktor k in der vorstehenden Gleichung als Funktion der gemessenen Netzspannung U und der Netzauslastungskurve A definiert:

$$V = k(A(t), U) \cdot ( A_{max} - A(t) ) + V_{min}$$

In einer weiteren Ausführung der Einrichtung 2 wird bei der Ermittlung des Vorgabewerts V zusätzlich berücksichtigt, ob die Hausstrominstallation 8 eine PV-Anlage 14 umfasst. In diesem Fall wird beispielsweise Proportionalitätsfaktor k in der vorstehenden Gleichung als Funktion der durchschnittlichen Sonneneinstrahlung S im Tagesverlauf definiert

$$V = k(S(t)) \cdot ( A_{max} - A(t) ) + V_{min}$$

Bei der Bestimmung der Funktion k(S(t)) können neben der Sonneneinstrahlung S insbesondere auch folgende Parameter der PV-Anlage 14 berücksichtigt werden:

a) geographischer Standort der Ladestation 6, z.B. in Form einer Postleitzahl
b) optional Nennleistung der PV-Anlage 14,
c) optional Neigung der PV-Anlage 14, und
d) optional geographische Ausrichtung der PV-Anlage 14 bezüglich der Himmelsrichtungen (insbesondere Azimutwinkel).

Die Bestimmung der Funktion k kann wahlweise direkt durch die Bedien-App 40 erfolgen oder durch den Netzbetreiber oder einen Dienstleister vorgenommen werden.
Alternativ hierzu kann die Variation der Sonneneinstrahlung direkt in die Netzauslastungskurve A oder eine hieraus berechnete Ladekurve einberechnet werden.
Alle vorstehend beschriebenen Varianten haben zur Folge, dass in Hausstrominstallationen 8 mit PV-Anlage 14 bei gegebener Netzauslastung im Falle einer hohen durchschnittlichen Sonneneinstrahlung (insbesondere über die Tagesmitte) der Vorgabewert V der Ladestromstärke höher eingestellt wird als in Hausstrominstallationen 8 ohne PV-Anlage 14. Dieser Effekt ist in Fig. 5 veranschaulicht. In dem oberen Diagramm dieser Figur ist zusätzlich zu dem Tagesverlauf der Netzauslastungskurve A (gemäß Fig. 2) der durchschnittliche Tagesverlauf der Sonneneinstrahlung S angetragen. In dem unteren Diagramm der Fig. 5 ist neben dem Tagesverlauf des Vorgabewerts V für eine Hausstrominstallation 8 ohne PV-Anlage 14 (strichpunktierte Linie) auch der Tagesverlauf des Vorgabewerts V für eine Hausstrominstallation 8 mit PV-Anlage 14 (durchgezogene Linie) eingetragen.
Die Erfindung wird an den vorstehend beschriebenen Ausführungsbeispielen besonders deutlich, ist auf diese Ausführungsbeispiele aber nicht beschränkt. Vielmehr können weitere Ausführungsformen der Erfindung aus den Ansprüchen und der vorstehenden Beschreibung abgeleitet werden. Insbesondere können die an den beiden vorstehenden Ausführungsbeispielen beschriebenen Einzelmerkmale des Verfahrens und der Einrichtung im Rahmen der Ansprüche auch in anderer Weise miteinander kombiniert werden.

Bezugszeichenliste

2   Einrichtung
4   E-Fahrzeug
6   Ladestation
8   Hausstrominstallation
10   Netzverknüpfungspunkt
12   Stromnetz
14   PV-Anlage
16   Anschlussdose
18   Ladekabel
20   Ladestecker

22 Leistungsschalter
24 Hauptstromleitung
26 Steuerelektronik
28 Firmware
30 Datenleitung
32 Datenleitung
34 Transceiver
36 Transceiver
38 Pfeil
40 Bedien-App
42 Smartphone
44 Datenübertragungsstrecke

$t$ Zeit
$t_1$-$t_8$ Zeitpunkt
$I_L$ Ladestrom
A Netzauslastungskurve
$A_{max}$ Schwellwert
$A_{min}$ Schwellwert
S Sonneneinstrahlung
U Netzspannung
V Vorgabewert
$V_{max}$ Maximalwert
$V_{min}$ Minimalwert

**Patentansprüche**

1. Verfahren zum Betrieb einer Ladestation (6) zum Laden eines Elektrofahrzeugs (4), wobei die Ladestation (6) unmittelbar oder mittelbar über eine lokale Stromverteilung (8) an ein öffentliches Stromnetz (12) anschließbar ist, um einen Ladestrom ($I_L$) mit einem bestimmten Vorgabewert (V) der Ladestromstärke für das Elektrofahrzeug (4) zur Verfügung zu stellen, wobei der Vorgabewert (V) zeitlich variierend vorgegeben wird, so dass der Vorgabewert (V) gegenläufig zu einer Netzauslastung des Stromnetzes (12) variiert.

2. Verfahren nach Anspruch 1,
wobei der Vorgabewert (V) der Ladestromstärke anhand einer in der Ladestation (6) oder einem externen Datenspeicher hinterlegten Ladekurve, insbesondere in Form einer zeitabhängigen mathematischen Funktion oder Stützpunkttabelle, bestimmt wird.

3. Verfahren nach Anspruch 2,
wobei als Ladekurve eine die Netzauslastung an dem geographischen Standort der Ladestation (6) oder in einem abgegrenzten Netzbereich des Stromnetzes, an den die Ladestation (6) angeschlossen ist, spezifisch wiedergebende Netzauslastungskurve (A) vorgegeben ist, und wobei der Vorgabewert (V) anhand des Abstands eines aktuellen Werts der Netzauslastungskurve (A) zu einem vorgegebenen Schwellwert ($A_{max}$) bestimmt wird.

4. Verfahren nach Anspruch 2 oder 3,
wobei die Ladekurve an sich im Wochen- und/oder Jahresverlauf durchschnittlich ergebende Unterschiede der Netzauslastung angepasst ist.

5. Verfahren nach einem der Ansprüche 1 bis 4,
wobei der Vorgabewert (V) der Ladestromstärke in Abhängigkeit von einer Information über die tatsächliche Netzauslastung variiert wird.

6. Verfahren nach Anspruch 5,
wobei als Information über die tatsächliche Netzauslastung

- die gemessene Netzspannung, und/oder
- die gemessene Netzfrequenz, und/oder

- Prognosedaten bezüglich einer zu erwartenden Netzauslastung herangezogen werden.

**7.** Verfahren nach Anspruch 6,
wobei die Prognosedaten, insbesondere in Form einer mehrere Tage abdeckenden Langzeitprognose, mittels einer auf einem mobilen Endgerät installierten App (40) ermittelt werden, die datenübertragungstechnisch mit der Steuerelektronik (26) der Ladestation (6) verbindbar ist, und wobei die Prognosedaten oder die in Abhängigkeit hiervon angepasste Ladekurve von dem mobilen Endgerät auf die Ladestation (6) übertragen werden, wenn die App (40) mit der Ladestation (6) verbunden ist.

**8.** Verfahren einem der der Ansprüche 1 bis 7,
wobei der Vorgabewert (V) anhand eines von der Netzauslastung abhängigen Leitsignals eines Netzbetreibers bestimmt wird.

**9.** Verfahren nach einem der Ansprüche 1 bis 8,
wonach eine durch die Ladekurve, durch die Information über die tatsächliche Netzauslastung oder durch das Leitsignal des Netzbetreibers veranlasste Änderung des Vorgabewerts (V), insbesondere eine Reduktion des Vorgabewerts (V) auf null, mit einem Zeitversatz durchgeführt wird, und wobei der Zeitversatz in einer für die Ladestation (6) oder den laufenden Ladezyklus spezifischen Weise variiert wird.

**10.** Einrichtung (2) zum Laden eines Elektrofahrzeugs (4), mit einer Ladestation (6), die unmittelbar oder mittelbar über eine lokale Stromverteilung (8) an ein öffentliches Stromnetz (12) anschließbar ist, um einen Ladestrom ($I_L$) für das Elektrofahrzeug (4) zur Verfügung zu stellen, und mit einer Steuerelektronik (26), die dazu eingerichtet ist, einen Ladevorgang zum Aufladen eines E-Fahrzeugs (4) freizugeben und hierbei einen Vorgabewert (V) der Ladestromstärke zeitlich variierend vorzugeben, so dass der Vorgabewert (V) gegenläufig zu einer Netzauslastung des Stromnetzes (12) variiert.

**11.** Einrichtung (2) nach Anspruch 10,
wobei die Steuerelektronik (26) dazu eingerichtet ist, den Vorgabewert (V) der Ladestromstärke anhand einer in der Ladestation (6) oder einem externen Datenspeicher hinterlegten Ladekurve, insbesondere in Form einer zeitabhängigen mathematischen Funktion oder Stützpunkttabelle, zu bestimmen.

**12.** Einrichtung (2) nach Anspruch 11,
wobei als Ladekurve eine die Netzauslastung an dem geographischen Standort der Ladestation (6) oder in einem abgegrenzten Netzbereich des Stromnetzes, an den die Ladestation angeschlossen ist, spezifisch wiedergebende Netzauslastungskurve (A) vorgegeben ist, und die Steuerelektronik (26) dazu eingerichtet ist, den Vorgabewert (V) anhand des Abstands eines aktuellen Werts der Netzauslastungskurve (A) zu einem vorgegebenen Schwellwert ($A_{max}$) zu bestimmen.

**13.** Einrichtung (2) nach Anspruch 11 oder 12,
wobei die Ladekurve an sich im Wochen- und/oder Jahresverlauf durchschnittlich ergebende Unterschiede der Netzauslastung angepasst ist.

**14.** Einrichtung (2) nach einem der Ansprüche 10 bis 13,
wobei die Steuerelektronik (26) dazu eingerichtet sind, den Vorgabewert (V) der Ladestromstärke in Abhängigkeit von einer Information (M) über die tatsächliche Netzauslastung zu variieren.

**15.** Einrichtung (2) nach Anspruch 14,
wobei die Steuerelektronik (26) dazu eingerichtet sind, als Information über die tatsächliche Netzauslastung

- die gemessene Netzspannung, und/oder
- die gemessene Netzfrequenz, und/oder
- Prognosedaten eines Netzbetreibers bezüglich einer zu erwartenden Netzauslastung

heranzuziehen.

**16.** Einrichtung (2) einem der der Ansprüche 10 bis 15,
wobei die Steuerelektronik (26) zum Empfang eines von der Netzauslastung abhängigen Leitsignals eines Netzbetreibers eingerichtet ist, und wobei die Steuerelektronik (26) dazu eingerichtet ist, den Vorgabewert (V) anhand des Leitsignals zu bestimmen.

17. Verfahren nach einem der Ansprüche 10 bis 16,
wonach die Steuerelektronik (26) dazu eingerichtet ist, eine durch die Ladekurve, die Information über die tatsächliche Netzauslastung oder das Leitsignal des Netzbetreibers veranlasste Änderung des Vorgabewerts (V), insbesondere eine Reduktion des Vorgabewerts (V) auf null, mit einem Zeitversatz durchzuführen, und den Zeitversatz in einer für die Ladestation (6) oder den laufenden Ladezyklus spezifischen Weise zu variieren.

Fig. 1

Fig. 2

Fig. 3

Fig. 4

Fig. 5

Europäisches
Patentamt

European
Patent Office

Office européen
des brevets

# EUROPÄISCHER RECHERCHENBERICHT

Nummer der Anmeldung

EP 23 16 0279

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 8 779 720 B2 (GAUL ARMIN [DE]; DIEFENBACH INGO [DE]; RWE AG [DE]) 15. Juli 2014 (2014-07-15) | 1-3,5-7, 9-12,14, 15,17 | INV. B60L53/51 B60L53/63 |
| Y | * Zusammenfassung; Abbildungen 1, 3a,3b * | 4,8,13, 16 | |
| | ----- | | |
| Y | DE 20 2018 101667 U1 (BOB PATENT GMBH [DE]) 5. Juni 2019 (2019-06-05) | 4,13 | |
| A | * Absatz [0018]; Abbildung 1 * | 5-7,14, 15 | |
| | ----- | | |
| A | EP 3 798 045 A1 (ENBW ENERGIE BADEN WUERTTEMBERG AG [DE]) 31. März 2021 (2021-03-31) * Absatz [0060]; Abbildung 2 * | 5-7,14, 15 | |
| | ----- | | |
| A | DE 10 2019 207128 A1 (BOSCH GMBH ROBERT [DE]) 19. November 2020 (2020-11-19) * Absatz [0031] * | 5-7,14, 15 | |
| | ----- | | RECHERCHIERTE SACHGEBIETE (IPC) |
| Y | DE 10 2014 113240 A1 (EEMOBILITY GMBH [DE]) 17. März 2016 (2016-03-17) * Absatz [0029]; Abbildung 2 * | 8,16 | B60L |
| | ----- | | |

Der vorliegende Recherchenbericht wurde für alle Patentansprüche erstellt

| Recherchenort | Abschlußdatum der Recherche | Prüfer |
|---|---|---|
| Den Haag | 12. Juli 2023 | Arias Pérez, Jagoba |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 16 0279

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-07-2023

| Im Recherchenbericht angeführtes Patentdokument | Datum der Veröffentlichung | Mitglied(er) der Patentfamilie | Datum der Veröffentlichung |
|---|---|---|---|
| US 8779720 B2 | 15-07-2014 | AR 078077 A1 | 12-10-2011 |
| | | CN 102498628 A | 13-06-2012 |
| | | DE 102009050042 A1 | 17-02-2011 |
| | | EP 2465176 A2 | 20-06-2012 |
| | | ES 2536307 T3 | 22-05-2015 |
| | | TW 201112571 A | 01-04-2011 |
| | | US 2012161704 A1 | 28-06-2012 |
| | | WO 2011018267 A2 | 17-02-2011 |
| DE 202018101667 U1 | 05-06-2019 | DE 102018203198 A1 | 05-09-2019 |
| | | DE 202018101667 U1 | 05-06-2019 |
| EP 3798045 A1 | 31-03-2021 | KEINE | |
| DE 102019207128 A1 | 19-11-2020 | KEINE | |
| DE 102014113240 A1 | 17-03-2016 | KEINE | |

EPO FORM P0461

Für nähere Einzelheiten zu diesem Anhang : siehe Amtsblatt des Europäischen Patentamts, Nr.12/82